Europäisches Patentamt

European Patent Office

Office européen des brevets

(11) Publication number: **0 356 088**
**A2**

# EUROPEAN PATENT APPLICATION

(21) Application number: **89308185.1**

(22) Date of filing: **11.08.89**

(51) Int. Cl.⁴: **H04N 9/78**

(30) Priority: **13.08.88 GB 8819314**

(43) Date of publication of application:
**28.02.90 Bulletin 90/09**

(84) Designated Contracting States:
**BE DE FR GB IT NL**

(71) Applicant: **BAL COMPONENTS LIMITED**
**Bermuda Road**
**Nuneaton Warwickshire(GB)**

(72) Inventor: **Robinson, David**
**39 Shelford Road Radcliffe-on-Trent**
**Nottingham NG12 1AE(GB)**

(74) Representative: **Hallam, Arnold Vincent et al**
**Walford & Hardman Brown 5 The Quadrant**
**Coventry CV1 2EL(GB)**

(54) Improvements relating to colour television signal processing.

(57) A decoder for decoding a PAL coolour signal
has a filter (12) for receiving a PAL composite signal
and separating the signal into luminance and
chrominance signals. A comb failure detector circuit
(14) is used to detect pre-selected error signals in
the composite signal and generate a comb error
signal in response. This is applied to a control input
(24) of the filter by way of an adaption circuit (84) in
order to cause the filter to separate all of the high
frequency content of the PAL signal as chrominance
signal when an error is detected. The adaption cir-
cuit has a delay circuit (20) which applies a delay of
one picture frame to the error signal to bring the
control signal into synchronism with the picture in-
formation.

EP 0 356 088 A2

## Improvements relating to colour television signal processing

The present invention relates to colour television signal processing and in particular to the separation of chroma information from luminance information in a PAL composite colour signal.

In a PAL decoder system for a PAL colour television system, a composite signal is filtered to separate lower order frequency components constituting the luminance information from the chroma information for further processing. A bandpass filter is normally used to filter the chroma signal and remove the unwanted luminance information from the signal. In studio broadcast systems an additional filter, known as a comb or vertical filter, is also used to remove any luminance crossmodulation components which are present in the chroma information. Ideally, all of the unwanted information is removed. Unfortunately, however, in practice error signals can occur in the transition band of the vertical filter and it is not possible to determine whether these error signals are chroma or luminance information.

The present invention seeks to provide an improved decoder for decoding a PAL colour signal.

Accordingly, the present invention provides a decoder for decoding a PAL colour signal comprising filter means for receiving a PAL composite signal and separating said signal into luminance and chrominance signals; a comb failure detector circuit for generating a comb error signal in response to detection of pre-selected error signals in said composite signal; and an adaption circuit coupling the output of said detector circuit to a control input of said filter means for applying a control signal proportioned to the magnitude of the error signals to said filter means for inhibiting the passage of said pre-selected error signals through said filter circuit, said adaption circuit having a delay circuit for applying a delay of one picture frame to said comb error signal.

The present invention is further described hereinafter, by way of example, with reference to the accompanying drawings, in which:

Figure 1 is a block circuit diagram of a first embodiment of a circuit according to the present invention;

Figure 2 is a more detailed circuit diagram of part of a PAL decoder circuit showing the circuit of Figure 1 in more detail;

Figure 3, has the comb failure detector in more detail; and

Figures 4a to 4d show the adaption control circuit in more detail.

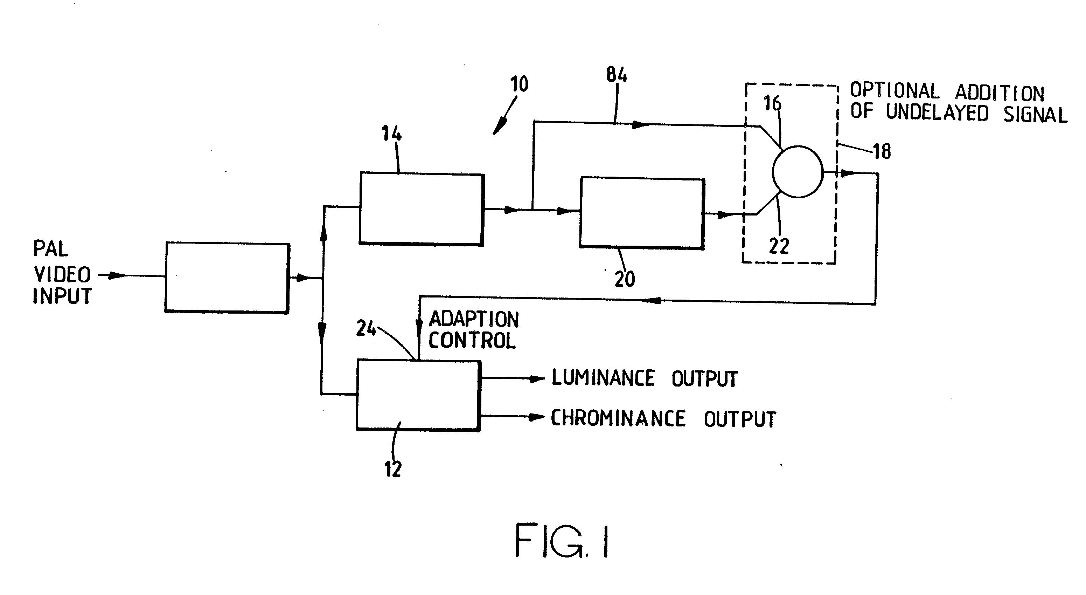

Figure 1 shows a circuit 10 forming part of a comb filter for a PAL decoder in which a comb or vertical filter 12 is used to separate an input PAL video signal into separate luminance and chrominance signals. The vertical filter incorporates typically two line delays arranged to give a three line aperture to the filter. The video signal input contains both the modulated chrominance signals U,V and high and low frequency luminance information. The low frequency luminance information is easily separated out and the vertical filter serves to separate chrominance information from the high frequency luminance information. However, if the high frequency content (luminance or chroma) of the video signal is not well correlated (i.e. if the chrominance information on three successive lines is not substantially the same) then the filter can fail to separate the chroma information from the high frequency luminance information, as a result of which both the luminance and chroma outputs may contain error signals which seriously degrade the resulting picture.

In order to overcome this problem, a comb failure detector circuit 14 is used to detect a lack of correlation between three successive picture lines and on detection of a lack of correlation controls the vertical filter 12 such that all of the high frequency content of the input video signal is treated as chroma information and passed to the chrominance output. Error signals from the comb failure detector circuit 14 are coupled directly to a first input 16 of an optional addition circuit 18 and indirectly, through a delay circuit 20, to a second input of the addition circuit 18. The delay circuit 20 serves to delay the output signal of the detector circuit 14 by the time span of one picture frame.

The addition circuit 18 is a non-additive mixing circuit which continuously monitors the amplitude of the signals at its inputs and passes that portion of each signal of greater amplitude. The result is a "stretched" signal which is then applied to a control input 24 of the filter circuit 12 to adjust the operation of the latter as outlined above. The addition circuit 18 is an optional circuit which can be omitted and the output of the delay circuit 20 applied directly to input 24 of the filter circuit 12. The addition circuit 18 may alternatively be a linear addition circuit. The use of the addition circuit 18 improves the performance of the circuit on moving pictures when the frame delayed signal applied to input 24 may not correlate with the picture.

Since the high frequency signals forming the chrominance and high frequency luminance information are not limited to separate vertical frequency bands during transmission, as is mentioned above it can be impossible to determine whether certain of these high frequency signals should be passed as luminance or chrominance information.

Since the loss of high frequency luminance is far less serious than the loss of chrominance information, the feeding of all of the high frequency signals to the chrominance output when an "error" is detected by the comb failure detector circuit does not have any noticeable effect on the luminance information.

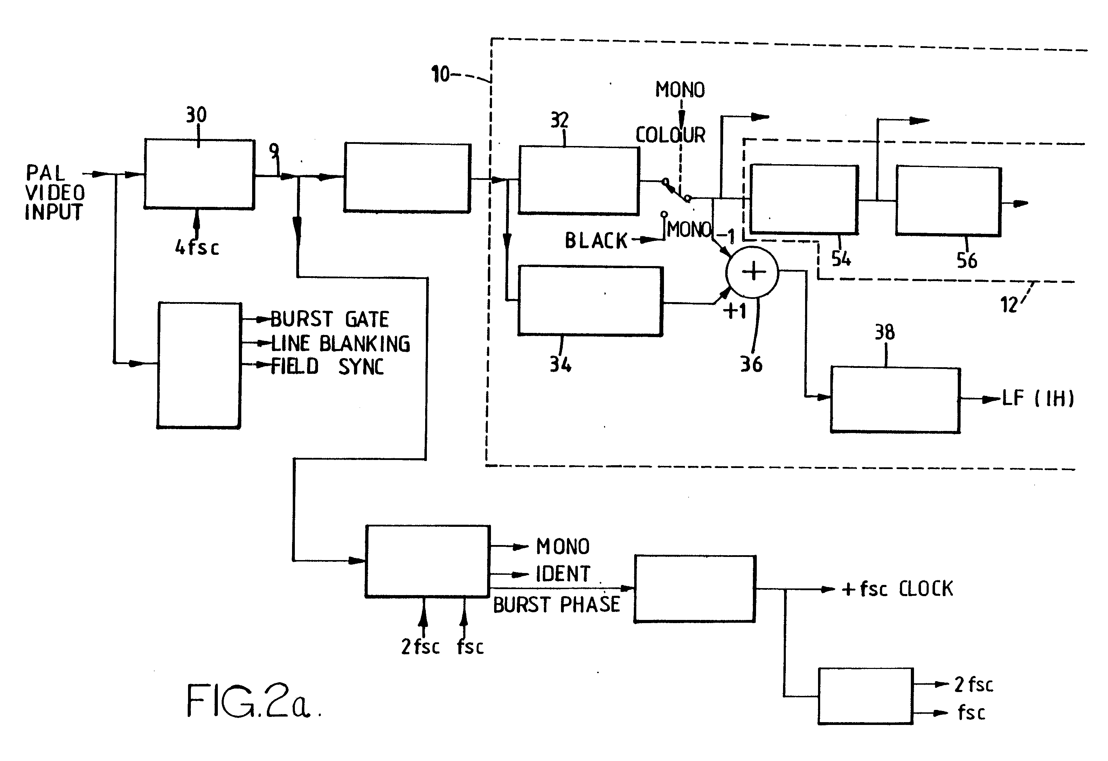

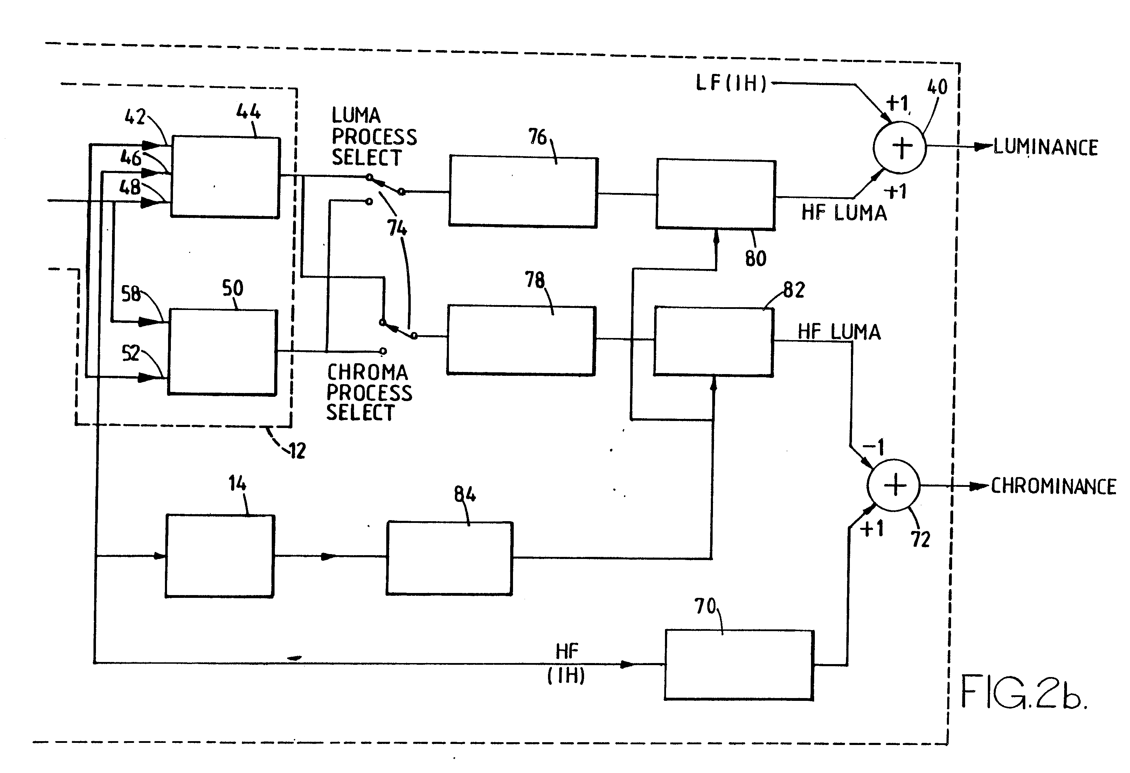

Referring now to Figure 2, this shows a block diagram of part of a PAL decoder system with the circuit of Figure 1 shown in further detail within the dashed lines as a two-dimensional complementary filter which separates the composite PAL signal into luminance and chrominance signals.

The decoder shown in Figure 2 uses digital processing. The composite PAL signal is applied to an analogue to digital converter 30 which converts the signal into a 9 bit data stream. This signal is then applied to the respective inputs of a chroma band pass filter 32 and a delay circuit 34. The band pass filter 32 separates the high frequency information, which is largely chroma information, from the luminance low frequency information. The outputs of the bandpass filter 32 and delay circuit 34 are applied to respective inputs of a summing circuit 36 whose output is applied through a one line delay circuit 38 to one input of a further summing circuit 40. The output of the latter provides the luminance signal.

The chroma signal output from the bandpass filter 32 is also applied directly to respective first inputs 42,52 and 62 of first and second luma matrices 44,50 and the comb failure detector 14. The chroma signal output of the bandpass filter 32 is also applied through a one line delay circuit 54 to respective second inputs 46,66 of the first luma matrix 44 and the comb failure detector 14. The output of the one line delay circuit 54 is also applied through a further one line delay circuit 56 to respective third inputs 48,68 of the first luma matrix 44 and comb failure detector 14 and to a second input 58 of the second luma matrix 50. Finally, the output of the first delay circuit 54 is also applied through a compensating delay circuit 70 to one input of a summing circuit 72 whose output provides the separated chrominance signal.

The two luma matrices 44,50 are connected through switches 74 to respective compensating delay circuits 76,78. The switches 74 enable the output of either the first or second luma matrices 44,50 to be applied to each of the delay circuits 76,78, to the exclusion of the other matrix. With the switches 74 in the position shown in Figure 2, the assumption is made that the input colour burst is accurate and the composite PAL signal has not suffered any distortion such as differential phase errors. The result is that any signals which look like chroma information but are in fact out of phase with the colour burst are decoded as luminance information. If the switches 74 are switched to apply the output of matrix 50 to the two delay circuits 76,78 then any signals which look like chroma but are out of phase with the colour burst are treated as chroma information. This improves the tolerance of the decoder to input phase errors.

The output of each delay circuit 76,78 is applied through a respective gain control circuit 80,82 and the output of gain control circuit 80 is applied to the second input of the summing circuit 40 to generate the separated luminance signal, whilst the output of gain control circuit 82 is applied to the second input of summing circuit 72 to generate the separated chrominance signal. The gain of both gain control circuits 80,82 is controlled through an adaption control circuit 84 by the output of the comb failure detector 14.

The line delays in the line delay circuits are implemented by storing the input signals in random access memories (RAMs) and reading out the stored data after the appropriate number of clock cycles. The clock frequency is locked to the input colour burst to ensure that the delays introduced by the delay circuits are accurate.

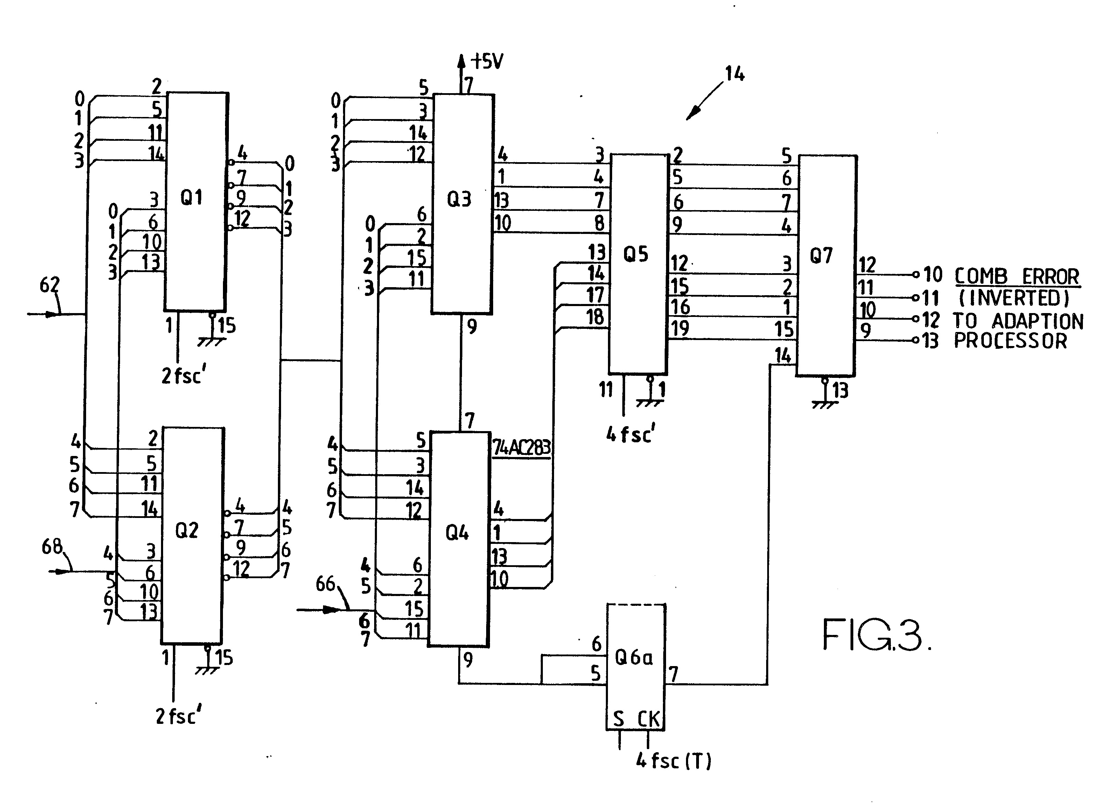

The comb failure detector circuit 14 is shown in greater detail in Figure 3. Circuits Q1 and Q2 are multiplexers which select either the undelayed signal at input 62 or the two-line delayed signal at input 68 and inverts the selected signal which is then added to the one-line delayed signal by circuits Q3 and Q4. The multiplexers are controlled by a control signal (2fsc') which is at twice the chrominance sub-carrier frequency and has a fixed phase relationship to the input colour burst signal. One of the signals at inputs 62, 68 is selected with the control signal high, and the other with the control signal low. The resulting signal provided by circuits Q3 and Q4 is retimed by circuits Q5 and Q6a and applied to Q7 which is a PROM. The latter provides fullwave rectification of the received signal which is the comb error signal since only the magnitude of the error is required. Circuit Q7 also rejects low level signals received at its input in order to reject noise and low level diagonal luminance signals. Since low level comb errors are not noticeable in the resulting picture the fact that such low level comb errors may also be rejected is not important.

Circuit Q7 also compresses the comb error signal to a 4 bit signal and as a result enables simplified circuitry to be used for the adaption control circuit 84 and the gain control circuits 80 and 82.

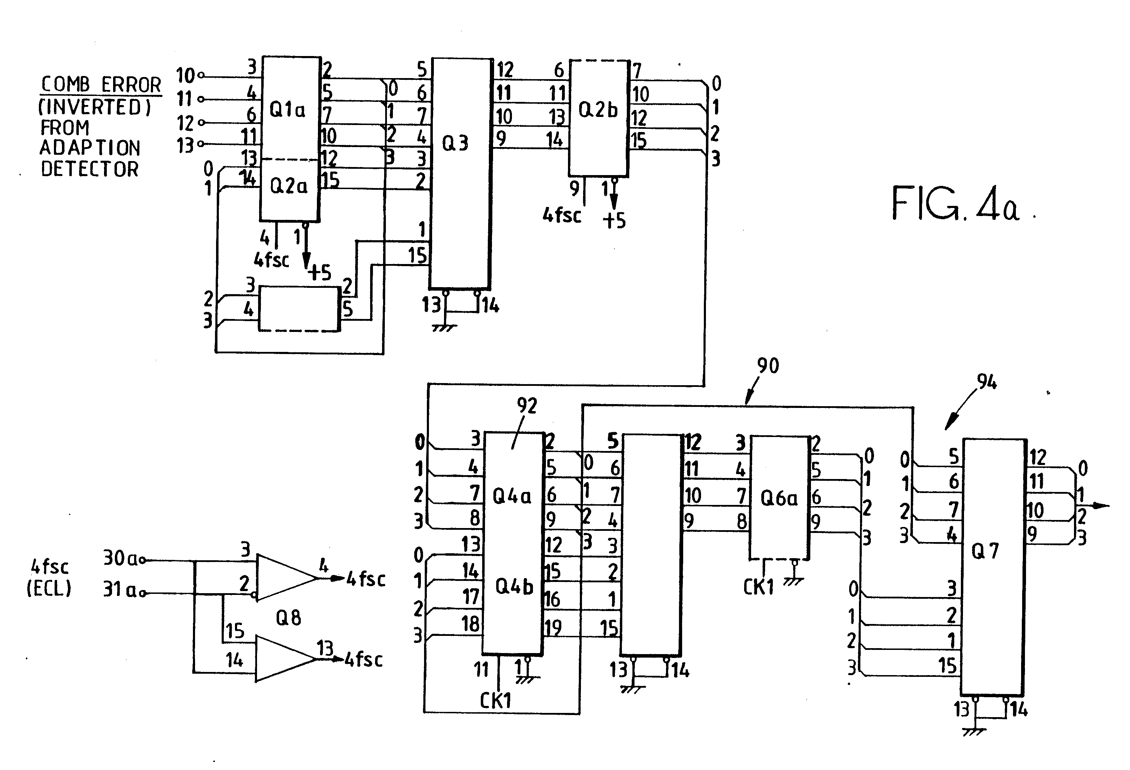

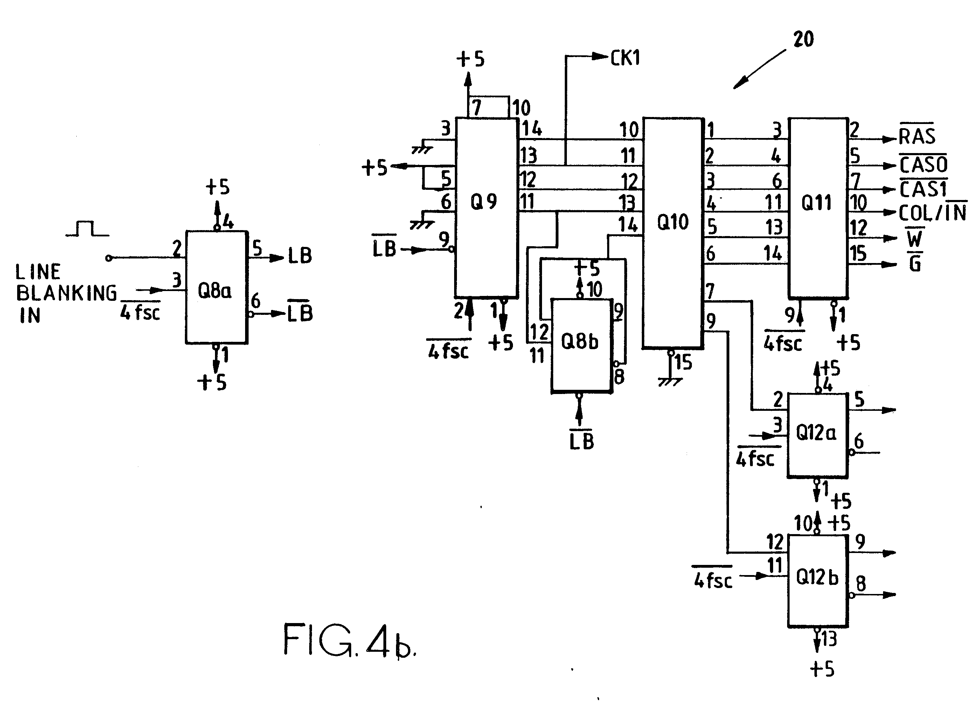

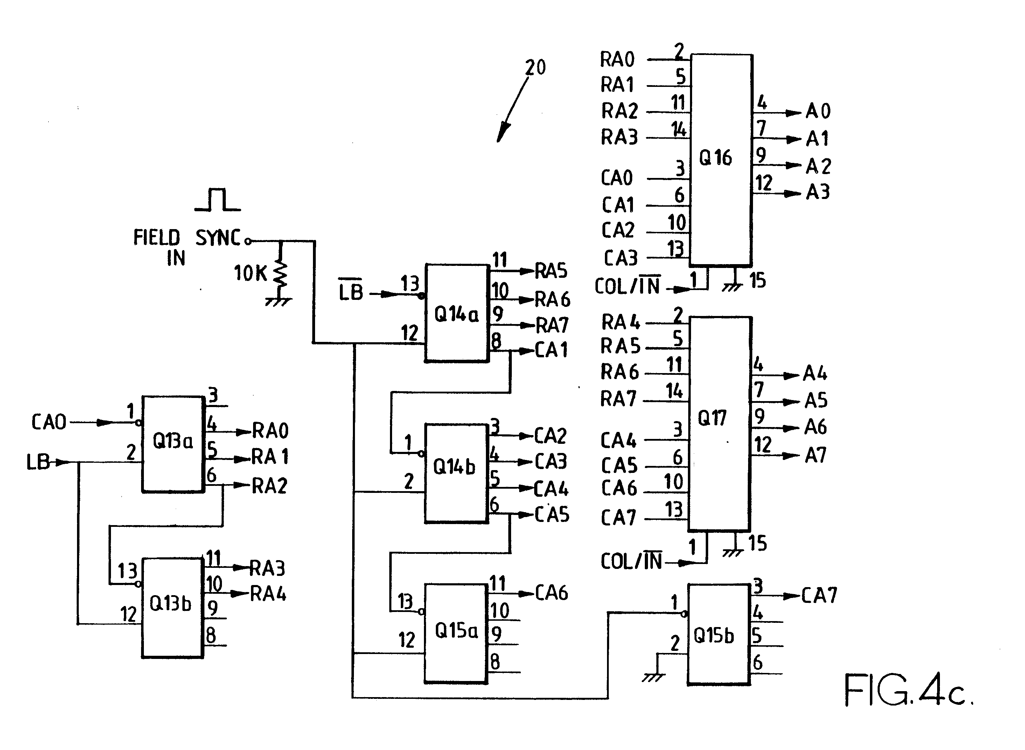

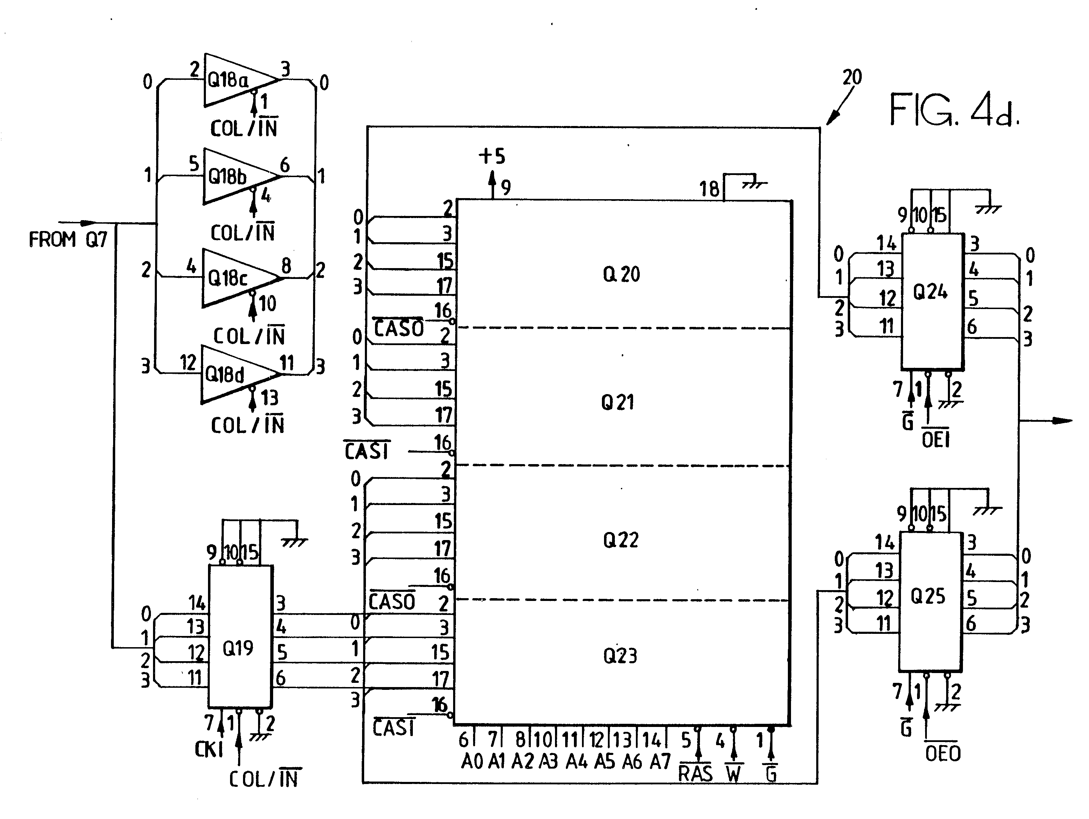

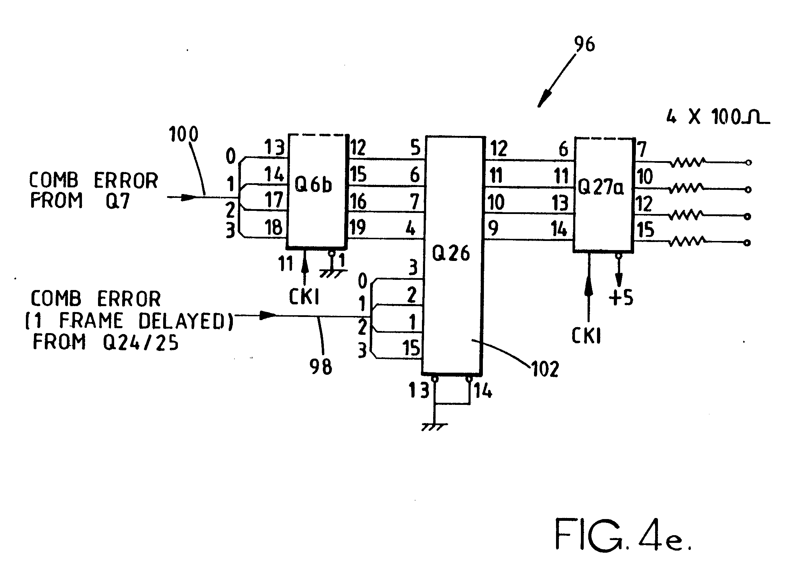

Figure 4a to 4d show a detailed circuit diagram of the adaption control circuit 84. The output signal from the comb failure detector 14 is applied to a filter circuit 104 whose input comprises circuit Q1a which applies the signal to circuit Q3 both directly and through circuits Q1b and Q2a. The latter delay the signal by one clock period. Circuit Q3 is a non-additive mixer PROM which rejects aliasing signals around twice the frequency of the chroma sub carrier. These signals appear in the comb error signal because the comb failure detector alternately samples the signal supplied to its inputs 62 and 68.

Circuit Q2b retimes the output of circuit Q3 and then applies the signal to a stretcher circuit 90. This includes a gating circuit 92 (circuits Q4a and Q4b) which reduces the signal sampling rate to that of the chroma sub carrier frequency. The signal is then applied to circuits Q5, Q6a and 94 which stretch the signal horizontally for several reasons. Firstly, the operation of circuit Q4a can leave gaps in the signal with certain luminance frequencies, due to aliasing. Secondly, the stretching helps to cover the transitions to and from the area of the error, and thirdly there is uncertainty in the horizontal position of the clock signal CK1 applied to circuit Q4, relative to the picture when the synchronizing signals are noisy or jittery. The clock signal CK1 is locked to the horizontal synchronizing signals, to the nearest edge of the basic clock signal which is four times the chroma sub carrier frequency. The non-additive mixing circuit 94 continuously compares the amplitude of the delayed signal through Q5 and Q6a with the undelayed signal from Q4b and passes the portion of each which is of greater amplitude to generate the "stretched" signal.

The main signal paths through the decoder circuit have compensating delays 76,78 to align them with the centre of the stretched adaption control signal. As is mentioned above, the frame delay circuits consist of dynamic RAMS. The one frame delay circuit 20 in the adaption control circuit is shown in Figures 4b, 4c and 4d. In Figure 4b counter circuit Q9 PROM Q10 and associated latches Q8,Q11 and Q12 provide the various timing and strobe signals required by the RAMs and by their associated latches and multiplexers. The timing sequence is locked to horizontal synchronizing signals by the line blanking input. The frame store only operates during the active line period to reduce the amount of RAM required. The clock signal CK1 is also taken from circuit Q9.

Circuit Q13 is a horizonal counter giving the first five RAM addresses. Circuits Q14 and Q15a are the vertical (line) counter. The last address is taken from circuit Q15b which is the odd/even field selector. The RAMs require multiplexed addresses and this is effected by circuits Q16 and Q17.

The data is de-multiplexed to 8 bits by circuits Q18, Q19 to allow slower RAM to be used. The RAM is circuits Q20 to Q23 organised as 128K x 8 bits. Circuits Q24 and Q25 latch the output and multiplex it to four bits again.

The output of the one frame delay circuit 20 is applied to one input 98 of a mixing circuit 96 whose other input 100 is coupled to the output of the comb failure detector circuit 14. The mixing circuit 96 serves as a stretcher circuit which continuously monitors the amplitude of the delayed and undelayed signals and passes that portion of each signal of greater amplitude to its output, resulting in a "stretched" signal. The circuit 96 includes a non-additive mixing circuit 102 which acts to compare the delayed and undelayed signals. In effect, where the delayed and undelayed signals are of the same amplitude, the leading edge of the undelayed signal is combined with the trailing edge of the delayed signal to form the stretched signal.

Circuit Q6b compensates for the delay in this demultiplexing operation. The output of the mixing circuit 102 is latched by circuit Q27a to feed the gain control circuits 80,82 in the vertical filter.

In the described PAL decoder, the contribution of each picture line to the high frequency luma output signal, ident odd, corresponds exactly to the contribution of that line to the comb failure detector output signal, ident even, and vice versa. Therefore, the comb failure error in the high frequency luma signal alternates from frame to frame, (giving in hitherto known decoders a 12.5Hz flicker which is characteristic of such comb filter systems). The signal received by the comb failure detector also alternates at the same rate, but with the opposite phase.

The above-described and illustrated decoder uses a one frame delay in the output of the comb failure detector. On stationary pictures, this means that the detector output tracks accurately the errors appearing in the high frequency luma signal. When this is used to control the adaption of the system to simple PAL decoding during comb errors, a substantial improvement in performance over previous systems is achieved.

On moving pictures the adaption control signal will lag behind the picture information due to the one frame delay. However, the change in resolution due to the adaption control signal, and the edge flicker effect are very difficult to observe on moving picture areas. Therefore, no special movement compensation is necessary.

The above described and illustrated decoder achieves improved moving picture performance by using the undelayed adaption control signal as well as the delayed signal. The two are combined using a non-additive mixer which means that whichever signal indicates the greater error is used as the control signal. This forms a temporal filter on the adaption control signal which rejects the 12.5Hz alternation component.

## Claims

1. A decoder for decoding a PAL colour signal comprising filter means (12) for receiving a PAL composite signal and separating said signal into luminance and chrominance signals; a comb failure detector circuit (14) for generating a comb error signal in response to detection of pre-selected error signals in said composite signal; and an adaption circuit (84) coupling the output of said detector circuit (14) to a control input (24) of said filter means for applying a control signal proportional to the magnitude of the error signals to said filter means for inhibiting the passage of said pre-selected error signals through said filter circuit, said adaption circuit having a delay circuit (20) for applying a delay of one picture frame to said comb error signal.

2. A decoder as claimed in claim 1 wherein said filter means (12) is operable in response to detection of said pre-selected error signals to separate the high frequency content of said PAL signal as chrominance signal.

3. A decoder as claimed in claim 1 or 2 wherein said adaption circuit (84) further comprises a mixing circuit (96) one input of which is coupled to an output of said delay circuit (20) for receiving said delayed comb error signal and a second input of which is coupled to the output of said comb failure detector circuit (14), said mixing circuit (96) being operable to combine the delayed and undelayed comb error signals to provide said control signal.

4. A decoder as claimed in claim 3 wherein said mixing circuit (96) is operable to monitor the amplitudes of the signals at its inputs and pass that portion of each signal of greater amplitude to its output.

5. A decoder as claimed in claim 3 or 4 wherein said mixing circuit (96) comprises a non-additive mixing circuit (102).

6. A decoder as claimed in any preceding claim wherein said adaption circuit (84) further comprises a filter circuit (104) coupled to said comb failure detector circuit (14) for filtering said comb error signal from said comb failure detector circuit to inhibit signals whose frequencies are at substantially twice the chroma sub carrier frequency.

7. A detector as claimed in any preceding claim wherein said adaption circuit (84) further comprises a stretcher circuit (90) for stretching said error signal horizontally, said stretcher circuit being coupled to an input of said delay circuit (20).

8. A detector as claimed in claim 7 wherein said stretcher circuit (90) comprises a second delay circuit for delaying said error signal a pre-selected time and a non-additive mixing circuit (94) for comparing said delayed error signal with the undelayed error signal and generating said stretched error signal.

9. A decoder as claimed in claim 7 or 8 wherein said stretcher circuit (90) further comprises a gating circuit (92) at its input for receiving said comb error signals and passing every nth error signal, where n is an integer between 1 and 6.

10. A decoder as claimed in claim 9 wherein n is 4.

FIG. 1

PAL VIDEO INPUT

30

4fsc

9

BURST GATE
LINE BLANKING
FIELD SYNC

10

MONO
COLOUR

32

BLACK

MONO

34

+1

36

MONO—1

54

56

12

38

LF (IH)

+ fsc CLOCK

MONO
IDENT
BURST PHASE

2fsc fsc

2fsc
fsc

FIG.2a.

FIG.2b.

EP 0 356 088 A2

FIG.3.

COMB ERROR
(INVERTED)
TO ADAPTION
PROCESSOR

EP 0 356 088 A2

FIG. 4a.

EP 0 356 088 A2

FIG. 4b.

EP 0 356 088 A2

FIG.4c.

FIG. 4d.

EP 0 356 088 A2

FIG. 4e.

EP 0 356 088 A2